# EUROPÄISCHE PATENTSCHRIFT

(11) **EP 1 274 548 B1**
(45) Veröffentlichungstag und Bekanntmachung des Hinweises auf die Patenterteilung: **29.12.2010**
(21) Anmeldenummer: 01927623.7
(22) Anmeldetag: 28.03.2001
(51) Int. Cl.: B27B 5/32, B23D 61/02, B23D 65/02

(54) **MASCHINENWERKZEUGAUFNAHME FÜR EIN KREISSÄGEBLATT**
MACHINE TOOL HOLDING DEVICE FOR A CIRCULAR SAW BLADE
LOGEMENT D'OUTIL MECANIQUE DESTINE A UNE LAME DE SCIE CIRCULAIRE

(30) Priorität: 11.04.2000 DE 10017980
(43) Veröffentlichungstag der Anmeldung: 15.01.2003
(73) Patentinhaber: ROBERT BOSCH GMBH, 70442 Stuttgart (DE)
(72) Erfinder: KRONDORFER, Harald, 71638 Ludwigsburg (DE); HECKMANN, Markus, 70771 Leinfelden-Echterdingen (DE); SCHADOW, Joachim, 72135 Dettenhausen (DE)
(74) Vertreter: Daub, Thomas
(86) Internationale Anmeldenummer: PCT/DE2001/001183
(87) Internationale Veröffentlichungsnummer: WO 2001/076836

(56) Entgegenhaltungen:
- EP-A- 0 770 443
- WO-A-99/56904
- DE-A- 2 843 807
- DE-A- 19 718 164
- US-A- 4 657 428
- US-A- 4 730 952
- US-A- 4 787 147

## Beschreibung

### Stand der Technik

Die Erfindung geht aus von einer Maschinenwerkzeugaufnahme nach dem Oberbegriff des Anspruchs 1 (siehe z.B. DE-A-19718164).

Aus der EP 0 904 896 A2 ist eine Schleifmaschinenwerkzeugaufnahme für eine handgeführte Winkelschleifmaschine bekannt.
Die Winkelschleifmaschine besitzt eine Antriebswelle, die werkzeugseitig ein Gewinde aufweist.

Die Schleifmaschinenwerkzeugaufnahme besitzt einen Mitnehmen und eine Spannmutter. Zur Montage einer Schleifscheibe wird der Mitnehmer mit einer Montageöffnung auf einen Bund der Antriebswelle aufgeschoben und über die Spannmutter in Umfangsrichtung kraftschlüssig gegen eine Auflagefläche der Antriebswelle verspannt. Der Mitnehmer besitzt einen sich werkzeugseitig in axialer Richtung erstreckenden Bund, der radial an zwei gegenüberliegenden Seiten an seinem Außenumfang Ausnehmungen aufweist, die sich in axialer Richtung bis zu einem Grund des Bunds erstrecken. Ausgehend von den Ausnehmungen erstreckt sich entgegen einer Antriebsrichtung der Antriebswelle jeweils eine Nut am Außenumfang des Bunds. Die Nuten sind entgegen einer Antriebsrichtung der Antriebswelle verschlossen und verjüngen sich axial ausgehend von den Ausnehmungen entgegen der Antriebsrichtung der Antriebswelle.

Die Schleifscheibe besitzt eine Werkzeugnabe mit einer Montageöffnung, in der zwei gegenüberliegende, radial nach innen weisende Zungen angeordnet sind. Die Zungen können in axialer Richtung in die Ausnehmungen und anschließend in Umfangsrichtung, entgegen der Antriebsrichtung, in die Nuten eingeführt werden. Die Schleifscheibe ist über die Zungen in den Nuten in axialer Richtung formschlüssig und durch die sich verjüngende Kontur der Nuten kraftschlüssig fixiert. Während des Betriebs nimmt der Kraftschluß infolge von auf die Schleifscheibe wirkenden Reaktionskräften zu, die entgegen der Antriebsrichtung wirken.

Um ein Ablaufen der Schleifscheibe beim Abbremsen der Antriebswelle vom Mitnehmer zu vermeiden, ist im Bereich einer Ausnehmung am Umfang des Bunds ein Stopper angeordnet, der in einer Öffnung in axialer Richtung beweglich gelagert ist. In einer mit der Schleifscheibe nach unten weisenden Arbeitsstellung wird der Stopper durch die Schwerkraft axial in Richtung Schleifscheibe ausgelenkt, verschließt in Richtung Ausnehmung die Nut und blockiert eine Bewegung der in der Nut befindlichen Zunge in Antriebsrichtung der Antriebswelle.

### Vorteile der Erfindung

Die Erfindung betrifft eine Maschinenwerkzeugaufnahme nach Anspruch 1.

Die Erfindung geht aus von einer Maschinenwerkzeugaufnahme, mit einer Mitnahmevorrichtung, über die ein Einsatzwerkzeug mit einer Antriebswelle wirkungsmäßig verbindbar ist, wobei das Einsatzwerkzeug über zumindest ein gegen ein Federelement bewegbar gelagertes Rastelement mit der Mitnahmevorrichtung wirkungsmäßig verbindbar ist, das in einer Betriebsstellung des Einsatzwerkzeugs einrastet und das Einsatzwerkzeug formschlüssig fixiert, wobei das Einsatzwerkzeug ein Kreissägenblatt ist und das Kreissägenblatt in Umfangsrichtung über zumindest ein erstes Element und in axialer Richtung über zumindest ein zweites Element mit der Mitnahmevorrichtung verbunden ist und die Mitnahmevorrichtung zumindest ein sich in axialer Richtung erstreckendes Befestigungselement aufweist, das durch zumindest einen Bereich eines Langlochs des Kreissägenblatts führbar und im Langloch in einen verengten Bereich des Langlochs verschiebbar ist und über das das Kreissägenblatt über eine am Befestigungselement angeordnete Anlagefläche im Langloch axial fixierbar ist.

Dadurch, daß das Einsatzwerkzeug ein Kreissägenblatt ist, kann durch den Formschluß eine hohe Sicherheit erreicht und es kann ein einfaches und kostengünstiges werkzeugloses Schnellspannsystem für eine Kreissäge, insbesondere eine Handkreissäge, geschaffen werden. Ein Ablaufen des Kreissägenblatts kann sicher vermieden werden, und zwar selbst bei gebremsten Antriebswellen, bei denen große Bremsmoment auftreten könnten. Durch das bewegbar gelagerte Rastelement kann bei der Montage des Kreissägenblatts eine große Auslenkung des Rastelements ermöglicht werden, wodurch zum einen eine große Überdeckung zwischen zwei korrespondierenden Rastelementen und ein besonders sicherer Formschluß realisierbar ist und zum anderen ein guL hörbares Einrastgeräusch erreicht werden kann, das einem Bediener einen wunschgemäß vollzogenen Einrastvorgang und eine Betriebsbereitschaft vorteilhaft signalisiert.

Das Rastelement kann das Kreissägenblatt direkt oder indirekt über ein zusätzliches Bauteil formschlüssig fixieren, beispielsweise über ein mit dem Rastelement gekoppelten, drehbar und/oder axial verschiebbar gelagerten Rasthebel bzw. Stößel usw. Das Rastelement kann das Kreissägenblatt in verschiedene Richtungen direkt und/oder indirekt formschlüssig fixieren, wie beispielsweise in radialer Richtung, in axialer Richtung und/oder besonders vorteilhaft in Umfangsrichtung. Möglich ist auch, daß durch die formschlüssige Fixierung des Kreissägenblatts mit dem Rastelement in eine erste Richtung, beispielsweise in radialer Richtung, das Kreissägenblatt durch ein vom Rastelement getrenntes Bauteil in eine zweite Richtung formschlüssig fixiert wird, beispielsweise in Umfangsrichtung.

Das bewegbar gelagerte Rastelement kann in verschiedenen, dem Fachmann als sinnvoll erscheinenden Formen ausgeführt sein, beispielsweise als Öffnung, Vorsprung, zapfen, Bolzen usw., und kann am Kreissägenblatt oder an der Mitnahmevorrichtung angeordnet serin. Das Rastelement kann selbst in einem Bauteil in einer Lagerstelle bewegbar gelagert sein, beispielsweise in einem Flansch der Mitnahmevorrichtung oder in einer Werkzeugnabe des Kreissägenblatts. Das Rastelement kann jedoch auch vorteilhaft mit einem in einer Lagerstelle bewegbar gelagerten Bauteil kraftschlüssig, formschlüssig und/oder stoffschlüssig fest verbunden oder mit diesem einstückig ausgeführt sein, beispielsweise mit einem auf der Antriebswelle gelagerten Bauteil oder mit einer Werkzeugnabe des Kreissägenblatts.

Ferner kann durch den Formschluß eine vorteilhafte Kodierung erreicht werden, so daß in der Maschinenwerkzeugaufnahme nur vorgesehene Kreissägenblätter befestigt werden können. Die Mitnahmevorrichtung kann zumindest teilweise als lösbares Adapterteil ausgeführt oder kann kraftschlüssig, formschlüssig und/oder stoffschlüssig unlösbar mit der Antriebswelle verbunden sein.

Ist das Kreissägenblatt in Umfangsrichtung über zumindest ein erstes Element und in axialer Richtung über zumindest ein zweites Element mit der Mitnahmevorrichtung verbunden, können einfache und kostengünstige Werkzeugnaben erreicht werden, die vorteilhaft eben ausgeführt werden können. Ein Verhaken der Werkzeugnaben bei der Herstellung und Lagerung kann vermieden und es kann eine gute Handhabung des Kreissägenblatts mit ihren Werkzeugnaben ermöglicht werden. Ferner können die Bauteile vorteilhaft auf ihre Funktion ausgelegt werden, d.h. entweder auf die Fixierung in Umfangsrichtung oder auf die Fixierung in axialer Richtung. Die Elemente können von einem Bauteil oder vorteilhaft von getrennten Bauteilen gebildet sein. Die Werkzeugnaben können einfach vorteilhaft mit einer geschlossenen Zentrierbohrung ausgeführt und es kann ein vibrationsarmer Lauf des Kreissägenblatts ermöglicht werden. Ferner kann bei einer geeigneten Wahl des Durchmessers der Zentrierbohrung erreicht werden, daß für die erfindungsgemäße Maschinenwerkzeugaufnahme vorgesehene Kreissägenblätter über bisher bekannte Befestigungsvorrichtungen an herkömmlichen Kreissägen befestigt werden können, und zwar insbesondere über Befestigungsvorrichtungen, bei denen das Kreissägenblatt mit einer Spannschraube oder Spannmutter auf der Antriebswelle gegen eine Auflagefläche in axialer Richtung formschlüssig und in Umfangsrichtung kraftschlüssig fixierbar ist.

Ferner wird vorgeschlagen, daß die Mitnahmevorrichtung zumindest ein sich in axialer Richtung erstreckendes Befestigungselement aufweist, das durch zumindest einen Bereich eines Langlochs einer Werkzeugnabe des Kreissägenblatts führbar und im Langloch in einen engeren Bereich des Langlochs verschiebbar ist und über das das Kreissägenblatt über eine am Befestigungselement angeordnete Übertragungsfläche im Langloch axial fixierbar ist. Die Werkzeugnabe kann vorteilhaft kostengünstig und im Wesentlichen eben ausgeführt und kann als Federelement genutzt werden, beispielsweise, indem die Werkzeugnabe beim Verschieben des Bauteils im Langloch elastisch verformt wird. Daneben kann die Werkzeugnabe dazu genutzt werden, ein Bauteil gegen ein Federelement in axialer Richtung auszulenken. Zusätzliche Bauteile, Montageaufwand und Kosten können eingespart werden.

Es wird vorgeschlagen, daß das sich in axialer Richtung erstreckende Befestigungselement zur axialen Fixierung des Kreissägenblatts in axialer Richtung gegen ein Federelement verschiebbar gelagert ist, wodurch zum einen ein vorteilhaft großer Federweg unabhängig von der Werkzeugnabe realisiert werden kann und zum anderen können das Bauteil und das Federelement gezielt auf deren getrennten Funktionen ausgelegt werden. Das Befestigungselement kann jedoch auch zumindest teilweise einstückig mit einem Federelement ausgeführt sein. Sind zur axialen Fixierung mehrere, sich in axialer Richtung erstreckende Bauteile vorgesehen, können diese jeweils über ein Federelement oder vorteilhaft über ein gemeinsames Federelement belastet sein, wodurch zusätzliche Bauteile, Montageaufwand, Gewicht und Kosten eingespart werden können.

Das Rastelement kann in verschiedenen Richtungen gegen ein Federelement bewegbar ausgeführt sein, wie beispielsweise in Umfangsrichtung oder besonders vorteilhaft in axialer Richtung, wodurch eine konstruktiv einfache Lösung erreichbar ist.

In einer weiteren Ausgestaltung der Erfindung wird vorgeschlagen, daß ein Antriebsmoment über eine formschlüssige Verbindung zwischen dem Kreissägenblatt und der Mitnahmevorrichtung übertragbar ist. Es kann ein großes Antriebsmoment sicher übertragen werden und zudem ist vermeidbar, daß sich ein Antriebsmoment auf eine kraftschlüssige Verbindung auswirkt.

Ist das Rastelement mit einer Entriegelungstaste aus seiner Raststellung lösbar und insbesondere gegen das Federelement bewegbar, können ein selbständiges Lösen der Rastverbindung, beispielsweise durch ein Bremsmoment, sicher vermieden und die Sicherheit erhöht werden. Ein Betrieb des Kreissägenblatts in zwei Umfangsrichtungen kann grundsätzlich ermöglicht und der Komfort bei der Montage und der Demontage des Kreissägenblatts kann gesteigert werden.

In einer weiteren Ausgestaltung wird vorgeschlagen, daß zumindest ein sich in axialer Richtung erstreckendes Rastelement in einer Betriebsstellung des Kreissägenblatts in axialer Richtung in eine dem Rastelement entsprechende Ausnehmung einer Werkzeugnabe des Kreissägenblatts einrastet und das Kreissägenblatt in Umfangsrichtung formschlüssig fixiert. Mit einer konstruktiv einfachen Lösung kann ein vorteilhafter Formschluß in eine Umfangsrichtung und vorzugsweise in beide Umfangsrichtungen erreicht werden. Das sich in axialer Richtung erstreckende Rastelement kann von einem separaten Bolzen oder von einem angeformten Zapfen gebildet sein, der beispielsweise durch einen Tiefziehvorgang hergestellt ist usw.

Vorteilhaft ist zumindest ein sich in axialer Richtung erstreckendes Rastelement in einem auf der Antriebswelle gegen das Federelement verschiebbar gelagerten Bauteil befestigt. Ein und besonders vorteilhaft mehrere Rastelemente können über eine große Lagerfläche auf der Antriebswelle gut geführt werden. Ein Verkippen der Rastelemente und eine Bewegung der Rastelemente zueinander kann sicher vermieden und es kann mit einem Federelement, das vorteilhaft rotationssymmetrisch mittig angeordnet werden kann, eine gewünschte Federkraft für einen Rastvorgang erreicht werden. Möglich ist jedoch auch, ein oder mehrere Rastelemente jeweils in Lagerstellen gegen jeweils ein Federelement oder gegen ein gemeinsames Federelement verschiebbar auszuführen.

Um eine vorteilhafte Zentrierung und einen vibrationsarmen Lauf des Kreissägenblatts zu erreichen, ist vorzugsweise an einem eine Auflagefläche für das Kreissägenblatt bildenden Bauteil der Mitnahmevorrichtung ein Bund angeformt, über den das Kreissägenblatt radial zentrierbar ist. Es kann einfach eine in sich geschlossene Zentrierfläche gebildet werden. Kräfte auf das Kreissägenblatt in radialer Richtung können vorteilhaft formschlüssig aufgenommen werden, beispielsweise Kräfte in radialer Richtung beim Durchtrennen eines Gegenstands. Es kann vermieden werden, daß Kräfte in radialer Richtung auf Bauteile einwirken, die axial verschieblich sind und daß diese Bauteile als Folge beschädigt werden bzw, verschleißen. Ferner wird auch ein radiales Spiel des Einsatzwerkzeugs sicher vermieden, wodurch ein besserer Rundlauf erzielbar ist. Grundsätzlich ist anstatt einem Bund auch eine Vertiefung denkbar, in die die Werkzeugnabe im befestigten Zustand mit einem Vorsprung eingreift.

Das Kreissägenblatt und seine Werkzeugnabe können durch verschiedene, dem Fachmann als sinnvoll erscheinende Verfahren hergestellt werden. Besonders vorteilhaft wird jedoch in einem Herstellvorgang, insbesondere in einem Laserschneidverfahren, zur Herstellung einer Außenkontur des Kreissägenblatts zumindest eine Ausnehmung für die Maschinenwerkzeugaufnahme in das Kreissägenblatt bzw. die Werkzeugnabe eingebracht, wodurch Fertigungszeit und -kosten eingespart werden können. Ferner ist möglich das Kreissägenblatt mit seiner Werkzeugnabe in einem Stanzvorgang herzustellen.

Ist zumindest ein Rastelement an einem scheibenförmigen Bauteil und/oder sind zumindest zwei Elemente zur Fixierung des Kreissägenblatts in axialer Richtung an einem scheibenförmigen Bauteil einstückig angeformt, können zusätzliche Bauteile, Montageaufwand und Kosten eingespart werden. Ferner können Preßverbindungen zwischen einzelnen Bauteilen und dadurch bedingte Schwachstellen vermieden werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmal in Kombination. Der Fachmann wird die Merkmale zweckmäßigerweise auch einzeln betrachten und zu sinnvollen weiteren Kombinationen zusammenfassen.

Es zeigen:
- Fig. 1: eine Handkreissäge schräg von oben,
- Fig. 2: einen schematischen Querschnitt entlang der Linie II-II in Fig. 1
- Fig. 3: eine Werkzeugnabe von einer der Handkreissäge abgewandten Seite,
- Fig. 4: einen schematischen Querschnitt entlang der Linie II-II in Fig. 1 durch eine erfindungsgemäße Maschinenwerkzeugaufnahme,
- Fig. 5: eine Explosionszeichnung einer Variante zu Fig. 4,
- Fig. 6: einen Schnitt durch eine Mitnehmerscheibe aus Fig. 5 mit angeformten Bolzen,
- Fig. 7: eine Seitenansicht einer Blechplatte aus Fig. 5 und
- Fig. 8: ein Mitnahmeflansch aus Fig. 5 von unten.

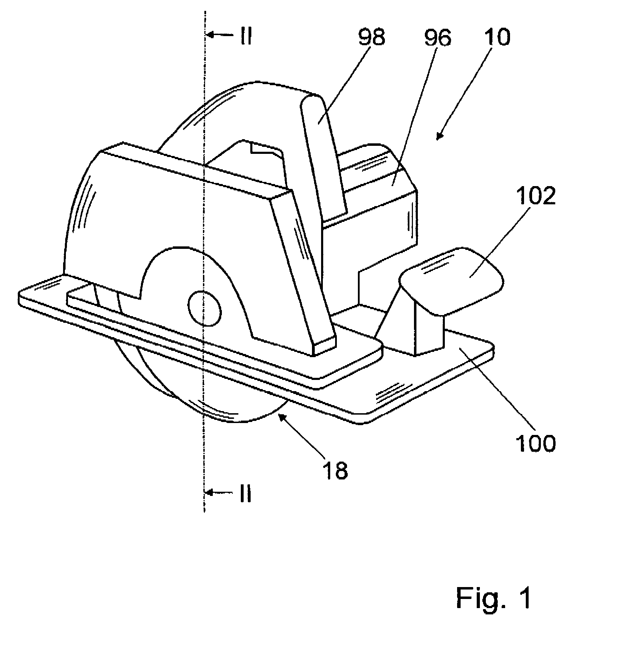

Fig. 1 zeigt eine Kreissäge 10 schräg von oben mit einem in einem Gehäuse 96 gelagerten, nicht näher dargestellten Elektromotor. Die Handkreissäge 10 ist über einen ersten, im Gehäuse 96 integrierten Handgriff 98 und über einen zweiten an einem Schutzblech 100 befestigten Handgriff 102 führbar.

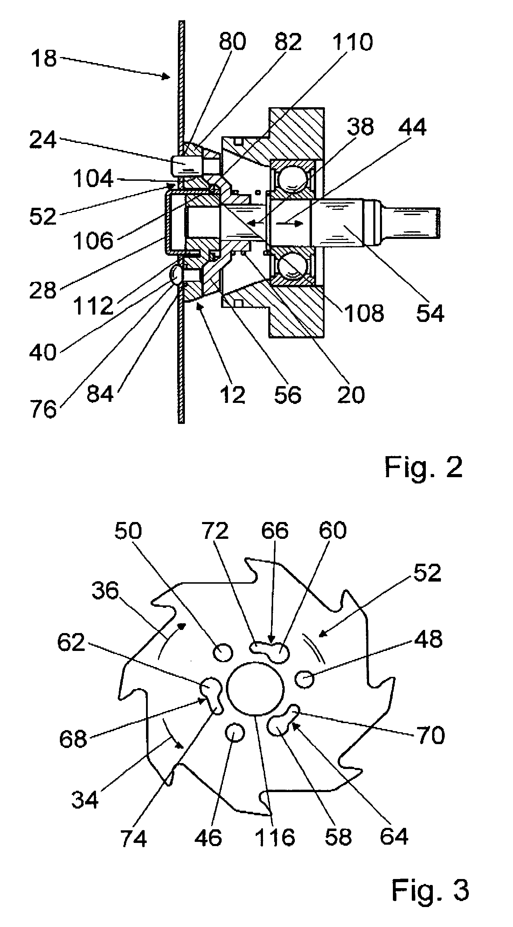

Mit dem Elektromotor ist über ein nicht näher dargestelltes Getriebe eine Antriebswelle 54 antreibbar, an deren zu einem Kreissägenblatt 18 weisenden Ende eine Mitnahmevorrichtung 12 angeordnet ist (Fig. 2). Das Ausführungsbeispiel der Figur 2 dient zur Veranschaulichung und fällt nicht unter den Schutzbereich des Patentanspruchs 1. Die Mitnahmevorrichtung 12 besitzt auf einer dem Kreissägenblatt 18 zugewandten Seite einen auf der Antriebswelle 54 fest aufgepreßten Mitnahmeflansch 82 und auf einer dem Kreissägenblatt 18 abgewandten Seite eine auf der Antriebswelle 54 axial gegen eine mittig angeordnete Schraubenfeder 20 verschiebbar gelagerte Mitnehmerscheibe 56.

Im Mitnahmeflansch 82 sind drei gleichmäßig in Umfangsrichtung 34, 36 verteilte, sich in axialer Richtung 38 zum Kreissägenblatt 18 über den Mitnahmeflansch 82 erstreckende Stifte 40 eingepreßt. Die Stifte 40 besitzen an ihrem zum Kreissägenblatt 18 weisenden Ende jeweils einen Kopf, der gegenüber einem restlichen Teil des Stifts 40 einen größeren Durchmesser aufweist und auf einer dem Mitnahmeflansch 82 zugewandten Seite eine konische, sich in axialer Richtung 44 verjüngende Anlagefläche 76 besitzt. Der Mitnahmeflansch 82 bildet für das Kreissägenblatt 18 eine axiale Auflagefläche 80, die eine axiale Position des Kreissägenblatt 18 festlegt und in der im Bereich der Stifte 40 Ausnehmungen 84 eingebracht sind. Ferner sind in Umfangsrichtung 34, 36 hintereinander drei axiale Durchgangsbohrungen 104 in den Mitnahmeflansch 82 eingebracht, und zwar ist jeweils eine Durchgangsbohrung 104 in Umfangsrichtung 34, 36 zwischen zwei Stiften 40 angeordnet.

In der axial auf der Antriebswelle 54 verschiebbar gelagerten Mitnehmerscheibe 56 sind in Umfangsrichtung 34, 36 gleichmäßig verteilt drei Bolzen 24 eingepreßt, die sich in axialer Richtung 38 zum Kreissägenblatt 18 über die Mitnehmerscheibe 56 erstrecken. Die Mitnehmerscheibe 56 wird durch die Schraubenfeder 20 in Richtung 38 zum Kreissägenblatt 18 gegen den Mitnahmeflansch 82 gedrückt. Die Bolzen 24 ragen durch die Durchgangsbohrungen 104 und erstrecken sich in axialer Richtung 38 über den Mitnahmeflansch 82.

Ferner besitzt die Mitnahmevorrichtung 12 eine topfförmige, auf der dem Kreissägenblatt 18 zugewandten Seite mittig angeordnete Entriegelungstaste 28. Die Entriegelungstaste 28 besitzt drei gleichmäßig in Umfangsrichtung 34, 36 verteilte, sich in axialer Richtung 44 zur axial beweglichen Mitnehmerscheibe 56 erstreckende Segmente 106, die durch entsprechende Ausnehmungen 108 des Mitnahmeflansches 82 greifen und über einen Sprengring 110 in der Mitnehmerscheibe 56 in axialer Richtung 38 gegen Herausfallen gesichert sind. Die Entriegelungstaste 28 ist in einer ringförmigen Ausnehmung 112 im Mitnahmeflansch 82 in axialer Richtung 38, 44 verschiebbar geführt.

Das Kreissägenblatt 18 weist eine Werkzeugnabe 52 auf, die einstückig mit dem Kreissägenblatt 18 ausgeführt ist. Grundsätzlich wäre auch eine Werkzeugnabe denkbar, die über ein kraft- form- und/oder stoffschlüssige Verbindung mit dem Kreissägenblatt verbunden ist. Die Werkzeugnaben können dann aus einem vom Kreissägenblatt unabhängigen, dem Fachmann als sinnvoll erscheinenden Material hergestellt werden, beispielsweise aus einem speziellen Kunststoff. Die Werkzeugnabe 52 besitzt in Umfangsrichtung 34, 36 drei gleichmäßig verteilte Bohrungen 46, 48, 50, deren Durchmesser geringfügig größer ist als der Durchmesser der Bolzen 24. Ferner besitzt die Werkzeugnabe 52 drei gleichmäßig in Umfangsrichtung 34, 36 verteilte, sich in Umfangsrichtung 34, 36 erstreckende Langlöcher 64, 66, 68, die jeweils einen schmalen Bereich 70, 72, 74 und einen breiten, durch eine Bohrung hergestellten Bereich 58, 60, 62 aufweisen, deren Durchmesser geringfügig größer ist als der Durchmesser der Köpfe der Stifte 40.

Die Werkzeugnabe 52 besitzt eine Zentrierbohrung 116, deren Durchmesser vorteilhaft so gewählt ist, daß das Kreissägenblatt 18 auch mit einem herkömmlichen Spannsystem mit einem oder zwei Spannflansche und einer Spannschraube oder Spannmutter auf einer herkömmlichen Handkreissäge aufgespannt werden kann. Es wird eine sogenannte Abwärtskompatibilität sichergestellt.

Bei der Montage des Kreissägenblatts 18 wird das Kreissägenblatt 18 mit seiner Zentrierbohrung 116 auf die Entriegelungstaste 28 aufgeschoben und radial zentriert. Anschließend wird das Kreissägenblatt 18 verdreht, und zwar bis die Stifte 40 in die dafür vorgesehenen breiten Bereichen 58, 60, 62 der Langlöcher 64, 66, 68 der Werkzeugnabe 52 greifen. Ein Andrücken der Werkzeugnabe 52 an die Auflagefläche 80 des Mitnahmeflansches 82 bewirkt, daß die Bolzen 24 in den Durchgangsbohrungen 104 und die Mitnehmerscheibe 56 gegen eine Federkraft der Schraubenfeder 20 auf der Antriebswelle 54 axial in die vom Kreissägenblatt 18 abgewandte Richtung 44 verschoben werden.

Ein weiteres Verdrehen der Werkzeugnabe 52 entgegen der Antriebsrichtung 34 bewirkt, daß die Stifte 40 in die bogenförmigen schmalen Bereiche 70, 72, 74 der Langlöcher 64, 66, 68 verschoben werden. Dabei drücken die Stifte 40 mit ihren konischen Anlageflächen 76 auf die Ränder der Langlöcher 64, 66, 68 und drücken diese elastisch in die Ausnehmungen 84 des Mitnahmeflansches 82. Die Werkzeugnabe 52 wird dadurch an die Auflagefläche 80 gedrückt und in axialer Richtung 38, 44 fixiert.

In einer Endlage bzw. in einer erreichten Betriebsstellung des Kreissägenblatts 18 kommen die Bohrungen 46, 48, 50 in der Werkzeugnabe 52 über den Durchgangsbohrungen 104 des Mitnahmeflansches 82 zum Liegen. Die Bolzen 24 werden durch die Federkraft der Schraubenfeder 20 axial in Richtung 38 des Kreissägenblatts 18 verschoben, rasten in den Bohrungen 46, 48, 50 der Werkzeugnabe 52 ein und fixieren diese in beide Umfangsrichtungen 34, 36 formschlüssig. Beim Einrasten entsteht ein für einen Bediener hörbares Einrastgeräusch, das diesem eine Betriebsbereitschaft signalisiert.

Ein Antriobsmoment des Elektromotors der Handkreissäge 10 kann von der Antriebswelle 54 kraftschlüssig auf den Mitnahmeflansch 82 und vom Mitnahmeflansch 82 formschlüssig über die Bolzen 24 auf das Kreissägenblatt 18 übertragen werden. Das Antriebsmoment wird ausschließlich über die Bolzen 24 übertragen, da die Langlöcher 64, 66, 68 so gestaltet sind, daß die Stifte 40 bei eingerasteten Bolzen 24 nicht am Ende der schmalen Bereiche 70, 72, 74 der Langlöcher 64, 66, 68 zur Anlage kommen. Ferner kann ein beim und nach dem Abschalten des Elektromotors auftretendes, dem Antriebsmoment entgegengerichtetes Bremsmoment formschlüssig vom Mitnahmeflansch 82 über die Bolzen 24 auf das Kreissägenblatt 18 übertragen werden. Ein ungewünschtes Lösen des Kreissägenblatts 18 wird sicher vermieden. Durch die in Umfangsrichtung 34, 36 gleichmäßig verteilten drei Bolzen 24 wird eine vorteilhafte gleichmäßige Kräfte- und Massenverteilung erreicht.

Zum Lösen des Kreissägenblatts 18 von der Handkreissäge 10 wird die Entriegelungstaste 28 gedrückt. Die Mitnehmerscheibe 56 wird dabei mit den Bolzen 24 über die Entriegelungstaste 28 gegen die Schraubenfeder 20 in die von dem Kreissägenblatt 18 abgewandte axiale Richtung 44 verschoben, wodurch sich die Bolzen 24 in axialer Richtung 44 aus ihrer Raststellung bzw. aus den Bohrungen 46, 48, 50 der Werkzeugnabe 52 bewegen. Anschließend wird das Kreissägenblatt 18 in Antriebsrichtung 34 gedreht, und zwar bis die Stifte 40 in den breiten Bereichen 58, 60, 62 der Langlöcher 64, 66, 68 zum Liegen kommen und das Kreissägenblatt 18 in axialer Richtung 38 vom Mitnahmeflansch 82 abgenommen werden kann. Nach Loslassen der Entriegelungstaste 28 werden die Mitnehmerscheibe 56, die Bolzen 24 und die Entriegelungstaste 28 durch die Schraubenfeder 20 in ihre Ausgangslagen zurück verschoben.

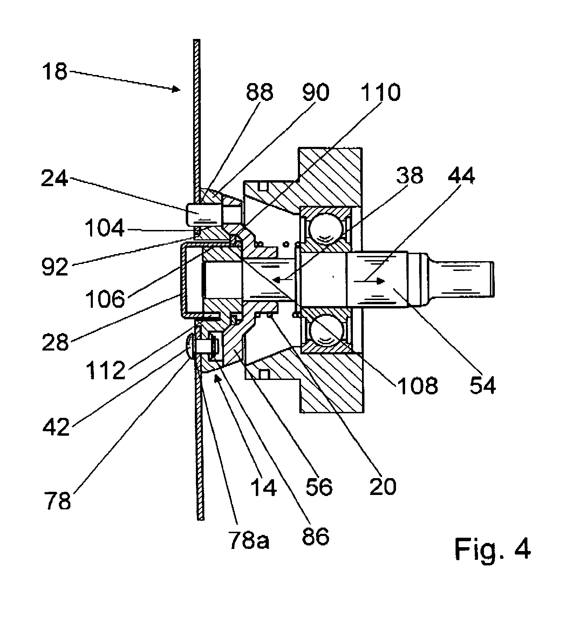

In Fig. 4 ist zum Ausführungsbeispiel in Fig. 2 ein alternatives Ausführungsbeispiel mit einer Mitnahmevorrichtung 14 dargestellt. Im Wesentlichen gleichbleibende Bauteile sind in den dargestellten Ausführungsbeispielen grundsätzlich mit den gleichen Bezugszeichen beziffert. Ferner kann bezüglich gleichbleibender Merkmale und Funktionen auf die Beschreibung zum Ausführungsbeispiel in Fig. 2 und 3 verwiesen werden.

Die Mitnahmevorrichtung 14 besitzt einen auf der Antriebswelle 54 aufgepreßten Mitnahmeflansch 90. An dem eine Auflagefläche 88 für das Kreissägenblatt 18 bildenden Mitnahmeflansch 90 ist ein Bund 92 angeformt, über den das Kreissägenblatt 18 im montierten Zustand mit seiner Zentrierbohrung 116 radial zentriert ist. Radiale Kräfte können vorteilhaft vom Mitnahmeflansch 90 aufgenommen werden, ohne die Entriegelungstaste 28 zu belasten.

Ferner sind im Mitnahmeflansch 90 drei in Umfangsrichtung 34, 36 gleichmäßig verteilte, sich in axialer Richtung 38 über die Auflagefläche 88 erstreckende Stifte 42 zur axialen Fixierung des Kreissägenblatts 18 in axialer Richtung 38 gegen jeweils eine Tellerfeder 86 verschiebbar gelagert. Die Stifte 42 besitzen an ihrem zum Kreissägenblatt 18 weisenden Ende jeweils einen Kopf, der gegenüber einem restlichen Teil des Stifts 42 einen größeren Durchmesser aufweist und auf einer dem Mitnahmeflansch 90 zugewandten Seite eine konische, sich in axialer Richtung 44 verjüngende Anlagefläche 78 und eine parallel zur Auflagefläche 88 verlaufende Anlagefläche 78a besitzt. Sind die Köpfe der Stifte 42 durch die breiten Bereiche 58, 60, 62 der Langlöcher 64, 66, 68 geführt, bewirkt ein Verdrehen der Werkzeugnabe 52 entgegen der Antriebsrichtung 34, daß die Stifte 42 in die bogenförmigen schmalen Bereiche 70, 72, 74 der Langlöcher 64, 66, 68 verschoben werden. Dabei werden die Stifte 42 über die konischen Anlageflächen 78 axial gegen den Druck der Tellerfedern 86 in Richtung 38 verschoben, bis die Anlageflächen 78a der Stifte 42 die Ränder der Langlöcher 64, 66, 68 in den bogenförmigen schmalen Bereichen 70, 72, 74 überdecken.

Im montierten Zustand pressen die Tellerfedern 86 über die Anlageflächen 78a der Stifte 42 das Kreissägenblatt 18 an die Auflagefläche 88. Anstatt mit mehreren Tellerfedern 86 können die Stifte auch über ein gemeinsames Federelement belastet sein, beispielsweise über eine sich über den gesamten Umfang erstreckende, nicht näher dargestellte Tellerfeder. Das in Fig. 4 dargestellte Ausführungsbeispiel mit den axial verschiebbar gelagerten Stiften 42 eignet sich besonders für dicke und/oder wenig elastisch verformbare Werkzeugnaben und Stammblätter, die bcreits erforderliche Bohrungen enthalten.

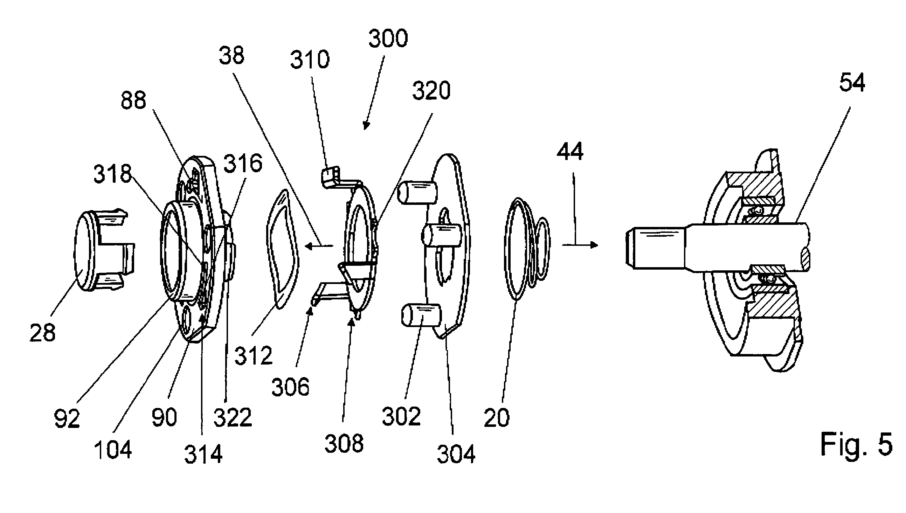

In Fig. 5 ist zum Ausführungsbeispiel in Fig. 4 ein alternatives Ausführungsbeispiel mit einer Mitnahmevorrichtung 300 dargestellt. Die Mitnahmevorrichtung 300 besitzt einen Mitnahmeflansch 90, der eine Auflagefläche 88 für ein nicht näher dargestelltes Kreissägenblatt bildet. An den Mitnahmeflansch 90 ist auf der dem Kreissägenblatt zugewandten Seite ein Bund 92 angeformt, über den das Kreissägenblatt mit seiner Zentrierbohrung im montierten Zustand radial zentriert ist. Radiale Kräfte können vorteilhaft vom Mitnahmeflansch 90 aufgenommen werden, ohne eine Entriegelungstaste 28 zu belasten.

Auf einer dem Kreissägenblatt abgewandten Seite des Mitnahmeflansches 90 ist eine Blechplatte 308 mit drei in Umfangsrichtung gleichmäßig verteilten, einstückig angeformten, sich in axialer Richtung 38 erstreckenden Befestigungselementen 306 zur axialen Fixierung des Kreissägenblatts angeordnet. Die Befestigungselemente 306 sind in einem Biegevorgang an die Blechplatte 308 angeformt.

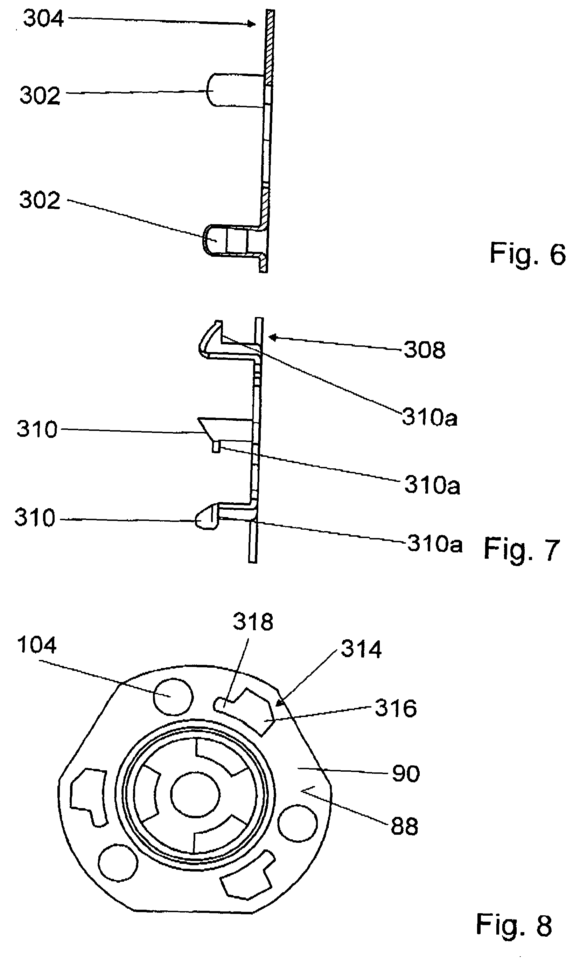

Bei der Montage werden der Mitnahmeflansch 90, eine Wellfeder 312 und die Blechplatte 308 vormontiert. Dabei wird die Wellfeder 312 auf einen in die von dem Kreissägenblatt abgewandte Richtung weisenden Bund 322 des Mitnahmeflansches 90 aufgeschoben. Anschließend werden die Befestigungselemente 306 der Blechplatte 308, die an ihrem freien Ende einen hakenförmigen Fortsatz mit einer in Umfangsrichtung weisenden Schrägfläche 310 aufweisen (Fig. 5 und 7), in axialer Richtung 38 durch Ausnehmungen 314 des Mitnahmeflansches 90 geführt, und zwar jeweils durch verbreiterte Bereiche 316 der Ausnehmungen 314 (Fig. 5 und 7). Durch Zusammendrücken und Verdrehen der Blechplatte 308 und des Mitnahmeflansches 90 gegeneinander wird die Wellfeder 312 vorgespannt, und die Blechplatte 308 und der Mitnahmeflansch 90 werden in axialer Richtung 38, 44 formschlüssig verbunden, und zwar indem die hakenförmigen Fortsätze in schmale Bereiche 318 der Ausnehmungen 314 verdreht werden (Fig. 5, 7 und 8). Die Blechplatte 308 ist anschließend, belastet durch die Wellfeder 312, an der Auflagefläche 88 des Mitnahmeflansches 90 über Kanten 310a der hakenförmigen Fortsätze abgestützt, die axial in die von dem Kreissägenblatt abgewandte Richtung weisen.

Nachdem die Blechplatte 308 mit den angeformten Befestigungselementen 306, die Wellfeder 312 und der Mitnahmeflansch 90 vormontiert sind, werden eine Druckfeder 20 und eine Mitnehmerscheibe 304 mit drei gleichmäßig über den Umfang verteilten, sich in axialer Richtung 38 erstreckenden, einstückig angeformten Bolzen 302 auf eine Antriebswelle 54 aufgesteckt. Die Bolzen 302 sind in einem Tiefziehvorgang an eine die Mitnehmerscheibe 304 bildende Blechplatte angeformt (Fig. 6).

Anschließend wird die vormontierte Baugruppe, bestehend aus der Blechplatte 308, der Wellfeder 312 und dem Mitnahmeflansch 90, auf die Antriebswelle 54 montiert. Die Bolzen 302 werden bei der Montage durch am Umfang der Blechplatte 308 angeformte Ausnehmungen 320 und durch Durchgangsbohrungen 104 im Mitnahmeflansch 90 geführt und greifen im montierten Zustand durch die Durchgangsbohrungen 104 hindurch. Die Blechplatte 308 und der Mitnahmeflansch 90 sind über die Bolzen 302 gegen Verdrehen zueinander gesichert. Der Mitnahmeflansch 90 wird auf die Antriebswelle 54 aufgepreßt und anschließend mit einem nicht näher dargestellten Sicherungsring gesichert. Neben einer Preßverbindung sind jedoch auch andere, dem Fachmann als sinnvoll erscheinende Verbindungen denkbar, wie beispielsweise eine Cewindeverbindung usw.

Sind bei der Montage des Kreissägenblatts 18 (vgl. Fig. 3 und 4) die hakenförmigen Fortsätze der Befestigungselemente 306 durch die breiten Bereiche 58, 60, 62 der Langlöcher 64, 66, 68 der Blechnabe 52 geführt, bewirkt ein Verdrehen der Werkzeugnabe 52 entgegen der Antriebsrichtung 34, daß die hakenförmigen Fortsätze in die bogenförmigen, schmalen Bereiche 70, 72, 74 der Langlöcher 64, 66, 68 der Werkzeugnabe 52 verschoben werden. Dabei wird die Blechplatte 308 mit den Befestigungselementen 306 über die Schrägflächen 310 axial gegen den Druck der Wellfeder 312 in Richtung 38 verschoben, bis die Kanten 310a der hakenförmigen Fortsätze in bogenförmigen, schmalen Bereichen 70, 72, 74 seitlich neben den Langlöchern 64, 66, 68 der Werkzeugnabe 53 zur Anlage kommen. Im montierten Zustand preßt die Wellfeder 312 über die Kanten 310a der hakenförmigen Fortsätze das Kreissägenblatt 18 an die Auflagefläche 88.

Alternativ können die Befestigungselemente und die Langlöcher in der Werkzeugnabe um 180° verdreht ausgeführt sein, so daß sich die Montagerichtung umkehrt, und die Werkzeugnabe bei der Montage in Antriebsrichtung verdreht wird. Sind die Befestigungselemente um 180° verdreht ausgeführt, eilt im Betrieb eine Schrägfläche einer unteren Stirnkante des Befestigungselements voraus, so daß Verletzungen durch die Stirnkante vermieden werden können.

### Bezugszeichen

- 10: Handkreissäge
- 12: Mitnahmevorrichtung
- 14: Mitnahmevorrichtung
- 18: Kreissägenblatt
- 20: Federelement
- 24: Rastelement
- 28: Entriegelungstaste
- 34: Umfangsrichtung
- 36: Umfangsrichtung
- 38: Richtung
- 40: Befestigungselement
- 42: Befestigungselement
- 44: Richtung
- 46: Ausnehmung
- 48: Ausnehmung
- 50: Ausnehmung
- 52: Werkzeugnabe
- 54: Antriebswelle
- 56: Bauteil
- 58: Bereich
- 60: Bereich
- 62: Bereich
- 64: Langloch
- 66: Langloch
- 68: Langloch
- 70: Bereich
- 72: Bereich
- 74: Bereich
- 76: Anlagefläche
- 78: Anlagefläche
- 80: Auflagefläche
- 82: Bauteil
- 84: Ausnehmung
- 86: Federelement
- 88: Auflagefläche
- 90: Bauteil
- 92: Bund
- 96: Gehäuse
- 98: Handgriff
- 100: Schutzblech
- 102: Handgriff
- 104: Durchgangsbohrung
- 106: Segment
- 108: Ausnehmung
- 110: Sprengring
- 112: Ausnehmung
- 116: Zentrierbohrung

- 300: Mitnahmevorrichtung
- 302: Rastelement
- 304: Bauteil
- 306: Element
- 308: Bauteil
- 310: Schrägfläche
- 310a: Kante
- 312: Federelement
- 314: Ausnehmung
- 316: Bereich
- 318: Bereich
- 320: Ausnehmung
- 322: Bund

## Patentansprüche

1. Maschinenwerkzeugaufnahme mit einer Mitnahmevorrichtung (14, 300), über die ein Einsatzwerkzeug mit einer Antriebswelle (54) wirkungsmäßig verbindbar ist, wobei das Einsatzwerkzeug über zumindest ein gegen ein Federelement (20) bewegbar gelagertes Rastelement (24, 302) mit der Mitnahmevorrichtung (14, 300) wirkungsmäßig verbindbar ist, das in einer Betriebsstellung des Einsatzwerkzeugs einrastet und das Einsatzwerkzeug formschlüssig fixiert, wobei das Einsatzwerkzeug ein Kreissägenblatt (18) ist und das Kreissägenblatt (18) in Umfangsrichtung (34, 36) über zumindest ein erstes Element (24, 302) und in axialer Richtung (38) über zumindest ein zweites Element (42, 306) mit der Mitnahmevorrichtung (14, 300) verbunden ist und die Mitnahmevorrichtung (14, 300) zumindest ein sich in axialer Richtung (38) erstreckendes Befestigungselement (42, 306) aufweist, das durch zumindest einen Bereich (58, 60, 62) eines Langlochs (64, 66, 68) des Kreissägenblatts (18) führbar und im Langloch (64, 66, 68) in einen verengten Bereich (70, 72, 74) des Langlochs (64, 66, 68) verschiebbar ist und über das das Kreissägenblatt (18) über eine am Befestigungselement (42, 306) angeordnete Anlagefläche (78, 310a) im Langloch (64, 66, 68) axial fixierbar ist, **dadurch gekennzeichnet, daß** das sich in axialer Richtung (38) erstreckende Befestigungselement (42, 306) zur axialen Fixierung des Kreissägenblatts (18) in axialer Richtung (38) gegen ein Federelement (86, 312) elastisch verschiebbar gelagert ist, wobei im montierten Zustand das Federelement (86, 312) über die Anlagefläche des Befestigungselementes (42, 306) das Kreissägeblatt (18) an die Mitnahmevorrichtung (14, 300) anpresst.

2. Maschinenwerkzeugaufnahme nach Anspruch 1, **dadurch gekennzeichnet, daß** das Rastelement (24, 302) in axialer Richtung (44) gegen das Federelement (20) verschiebbar ist.

3. Maschinenwerkzeugaufnahme nach Anspruch 1 oder 2, **dadurch gekennzeichnet, daß** ein Antriebsmoment über eine formschlüssige Verbindung zwischen dem Kreissägenblatt (18) und der Mitnahmevorrichtung (14, 300) übertragbar ist.

4. Maschinenwerkzeugaufnahme nach einem der vorhergehenden Ansprüche, **dadurch gekennzeichnet, daß** das Rastelement (24, 300) mit einer Entriegelungstaste (28) aus seiner Raststellung lösbar ist.

5. Maschinenwcrkzcugaufnahme nach Anspruch 1, **dadurch gekennzeichnet, daß** zumindest ein sich in axialer Richtung (38) erstreckendes Rastelement (24, 302) in einer Betriebsstellung des Kreissägenblatts (18) in axialer Richtung (38) in eine dem Rastelement (24, 302) entsprechende Ausnehmung (46, 48, 50) einer Werkzeugnabe (52) des Kreissägenblatts (18) einrastet und das Kreissägeblatt (18) in Umfangsrichtung (34, 36) formschlüssig fixiert.

6. Maschinenwerkzeugaufnahme nach Anspruch 5 **dadurch gekennzeichnet, daß** zumindest ein sich in axialer Richtung (38) erstreckendes Rastelement (24) in einem auf der Antriebswelle (54) gegen das Federelement (20) verschiebbar gelagerten Bauteil (56) befestigt ist.

7. Maschinenwerkzeugaufnahme nach einem der Ansprüche 1 bis 6, **dadurch gekennzeichnet, daß** an einem eine Auflagefläche (88) für das Kreissägenblatt (18) bildenden Bauteil (90) der Mitnahmevorrichtung (14, 300) ein Bund (92) angeformt ist, über den das Kreissägenblatt (18) radial zentrierbar ist.

8. Maschinenwerkzeugaufnahme nach einem der vorhergehenden Ansprüche, **dadurch gekennzeichnet, daß** zumindest ein Rastelement (302) an einem scheibenförmigen Bauteil (304) einstückig angeformt ist.

9. Maschinenwerkzeugaufnahme nach einem der vorhergehenden Ansprüche, **dadurch gekennzeichnet, daß** zumindest zwei Elemente (306) zur Fixierung des Kreissägenblatts (18) in axialer Richtung (38) an einem scheibenförmigen Bauteil (308) einstückig angeformt sind.

## Claims

1. Power tool holder having a driving device (14, 300), via which an application tool can be operatively connected to a drive shaft (54), wherein the application tool can be operatively connected to the driving device (14, 300) via at least one latching element (24, 302) which is movably mounted against a spring element (20) and which latches in place in an operating position of the application tool and fixes the application tool in a positive-locking manner, wherein the application tool is a circular saw blade (18), and the circular saw blade (18) is connected to the driving device (14, 300) in the circumferential direction (34, 36) via at least one first element (24, 302) and in the axial direction (38) via at least one second element (42, 306), and the driving device (14, 300) has at least one fastening element (42, 306) which extends in the axial direction (38) and which can be passed through at least one region (58, 60, 62) of an elongated hole (64, 66, 68) of the circular saw blade (18) and can be displaced in the elongated hole (64, 66, 68) into a narrowed region (70, 72, 74) of the elongated hole (64, 66, 68) and via which the circular saw blade (18) can be fixed axially in the elongated hole (64, 66, 68) via a bearing surface (78, 310a) arranged on the fastening element (42, 306), **characterized in that** the fastening element (42, 306) extending in the axial direction (38) is mounted such as to be elastically displaceable in the axial direction (38) against a spring element (86, 312) for axially fixing the circular saw blade (18), wherein, in the assembled state, the spring element (86, 312) presses the circular saw blade (18) against the driving device (14, 300) via the bearing surface of the fastening element (42, 306).

2. Power tool holder according to Claim 1, **characterized in that** the latching element (24, 302) is displaceable in the axial direction (44) against the spring element (20).

3. Power tool holder according to Claim 1 or 2, **characterized in that** a drive torque can be transmitted via a positive-locking connection between the circular saw blade (18) and the driving device (14, 300).

4. Power tool holder according to one of the preceding claims, **characterized in that** the latching element (24, 302) can be released from its latching position by an unlocking button (28).

5. Power tool holder according to Claim 1, **characterized in that** at least one latching element (24, 302) extending in the axial direction (38), in an operating position of the circular saw blade (18), latches in place in the axial direction (38) in an aperture (46, 48, 50), corresponding to the latching element (24, 302), of a tool hub (52) of the circular saw blade (18) and fixes the circular saw blade (18) in a positive-locking manner in the circumferential direction (34, 36).

6. Power tool holder according to Claim 5, **characterized in that** at least one latching element (24) extending in the axial direction (38) is fastened in a component (56) mounted on the drive shaft (54) such as to be displaceable against the spring element (20).

7. Power tool holder according to one of Claims 1 to 6, **characterized in that** a collar (92), via which the circular saw blade (18) can be centred radially, is integrally formed on a component (90) of the driving device (14, 300), said component (90) forming a supporting surface (88) for the circular saw blade (18).

8. Power tool holder according to one of the preceding claims, **characterized in that** at least one latching element (302) is integrally formed in one piece on a disc-shaped component (304).

9. Power tool holder according to one of the preceding claims, **characterized in that** at least two elements (306) for fixing the circular saw blade (18) in the axial direction (38) are integrally formed in one piece on a disc-shaped component (308).

## Revendications

1. Porte-outil de machine comprenant un dispositif d'entraînement (14, 300), qui permet de connecter fonctionnellement un outil à insérer avec un arbre d'entraînement (54), l'outil à insérer pouvant être connecté fonctionnellement par le biais d'au moins un élément d'encliquetage (24, 302) monté de manière mobile contre un élément de ressort (20) avec le dispositif d'entraînement (14, 300), l'élément d'encliquetage s'encliquetant dans une position de fonctionnement de l'outil à insérer et fixant par engagement par coopération de forme l'outil à insérer, l'outil à insérer étant une lame de scie circulaire (18) et la lame de scie circulaire (18) étant connectée au dispositif d'entraînement (14, 300) dans la direction périphérique (34, 36) par le biais d'au moins un premier élément (24, 302) et dans la direction axiale (38) par le biais d'au moins un deuxième élément (42, 306) et le dispositif d'entraînement (14, 300) présentant au moins un élément de fixation (42, 306) s'étendant dans la direction axiale (38), qui peut être guidé à travers au moins une région (58, 60, 62) d'un trou oblong (64, 66, 68) de la lame de scie circulaire (18) et être déplacé dans le trou oblong (64, 66, 68) dans une région rétrécie (70, 72, 74) du trou oblong (64, 66, 68) et par le biais duquel la lame de scie circulaire (18) peut être fixée axialement dans le trou oblong (64, 66, 68) par le biais d'une surface d'appui (78, 310a) disposée sur l'élément de fixation (42, 306), **caractérisé en ce que** l'élément de fixation (42, 306) s'étendant dans la direction axiale (38) est monté de manière déplaçable élastiquement en vue de fixer axialement la lame de scie circulaire (18) dans la direction axiale (38) contre un élément de ressort (86, 312), l'élément de ressort (86, 312) pressant la lame de scie circulaire (18) contre le dispositif d'entraînement (14, 300) dans l'état monté par le biais de la surface d'appui de l'élément de fixation (42, 306).

2. Porte-outil de machine selon la revendication 1, **caractérisé en ce que** l'élément d'encliquetage (24, 302) peut être déplacé dans la direction axiale (44) contre l'élément de ressort (20).

3. Porte-outil de machine selon la revendication 1 ou 2, **caractérisé en ce qu'**un couple d'entraînement peut être transmis par le biais d'une connexion par engagement par coopération de forme entre la lame de scie circulaire (18) et le dispositif d'entraînement (14, 300).

4. Porte-outil de machine selon l'une quelconque des revendications précédentes, **caractérisé en ce que** l'élément d'encliquetage (24, 302) peut être desserré de sa position d'encliquetage avec une touche de déverrouillage (28).

5. Porte-outil de machine selon la revendication 1, **caractérisé en ce qu'**au moins un élément d'encliquetage (24, 302) s'étendant dans la direction axiale (38), dans une position fonctionnelle de la lame de scie circulaire (18), s'encliquète dans la direction axiale (38) dans un évidement (46, 48, 50) d'un moyeu d'outil (52) de la scie circulaire (18) correspondant à l'élément d'encliquetage (24, 302) et fixe la lame de scie circulaire (18) dans la direction périphérique (34,36) par engagement par coopération de forme.

6. Porte-outil de machine selon la revendication 5, **caractérisé en ce qu'**au moins un élément d'encliquetage (24) s'étendant dans la direction axiale (38) est fixé dans un composant (56) monté de manière déplaçable sur l'arbre d'entraînement (54) contre l'élément de ressort (20).

7. Porte-outil de machine selon l'une quelconque des revendications 1 à 6, **caractérisé en ce qu'**un épaulement (92) est formé sur un composant (90) du dispositif d'entraînement (14, 300) formant une surface d'appui (88) pour la lame de scie circulaire (18), cet épaulement permettant de centrer radialement la lame de scie circulaire (18).

8. Porte-outil de machine selon l'une quelconque des revendications précédentes, **caractérisé en ce qu'**au moins un élément d'encliquetage (302) est formé d'une seule pièce sur un composant (304) en forme de disque.

9. Porte-outil de machine selon l'une quelconque des revendications précédentes, **caractérisé en ce qu'**au moins deux éléments (306) sont formés d'une seul pièce sur un composant en forme de disque (308) en vue de fixer la lame de scie circulaire (18) dans la direction axiale (38).
